(19) Europäisches Patentamt
European Patent Office
Office européen des brevets

(11) EP 0 968 855 A1

(12) EUROPEAN PATENT APPLICATION

(43) Date of publication:
05.01.2000 Bulletin 2000/01

(51) Int. Cl.$^7$: B60H 1/00

(21) Application number: 98304447.0

(22) Date of filing: 04.06.1998

(84) Designated Contracting States:
AT BE CH CY DE DK ES FI FR GB GR IE IT LI LU MC NL PT SE
Designated Extension States:
AL LT LV MK RO SI

(71) Applicant: Sanden Corporation
Isesaki-shi, Gunma 372-8502 (JP)

(72) Inventor: Inoue, Atsuo
Isesaki-shi, gunma, 372-8502 (JP)

(74) Representative:
Jackson, Peter Arthur
GILL JENNINGS & EVERY
Broadgate House
7 Eldon Street
London EC2M 7LH (GB)

(54) Air conditioning apparatus for vehicle

(57) An air conditioning apparatus for a vehicle that first controls a thermal perception that a passenger feels and maintains a comfortable feeling is disclosed. The air conditioning apparatus includes an objective thermal perception index setting unit (61), an air flow quantity registering unit (62), a room temperature sensing unit (63), an objective room temperature calculation unit (64), a room temperature control unit (65), an air flow quantity regulation unit (66), and an outlet air temperature regulating unit (67). The objective room temperature calculation unit calculates an objective room temperature within a compartment of a vehicle using signals from the objective thermal perception index setting unit and the air flow quantity registering unit. The room temperature control unit reduces a difference between the calculated objective room temperature and an actual room temperature sensed by the room temperature sensing means by providing control signals for the air flow quantity regulating unit and the outlet air temperature regulating unit. In another embodiment, an air conditioning apparatus for a vehicle further includes a direct sunlight quantity sensing unit, an ambient temperature sensing unit. The objective room temperature calculation unit calculates an objective room temperature within a compartment of a vehicle using signals from the objective thermal perception index setting unit, the air flow quantity registering unit, the direct sunlight quantity sensing unit, and the ambient temperature sensing unit, and reduces a difference between the calculated objective room temperature and an actual room temperature by providing control signals for the air flow quantity regulating unit and the outlet air temperature regulating unit.

Fig. 4

## Description

The present invention relates to air conditioning apparatus for vehicles, and, more particularly, to air conditioning apparatus with which a passenger in a vehicle may set a desired thermal perception, and one which can maintain that thermal perception in a vehicle compartment precisely and comfortably.

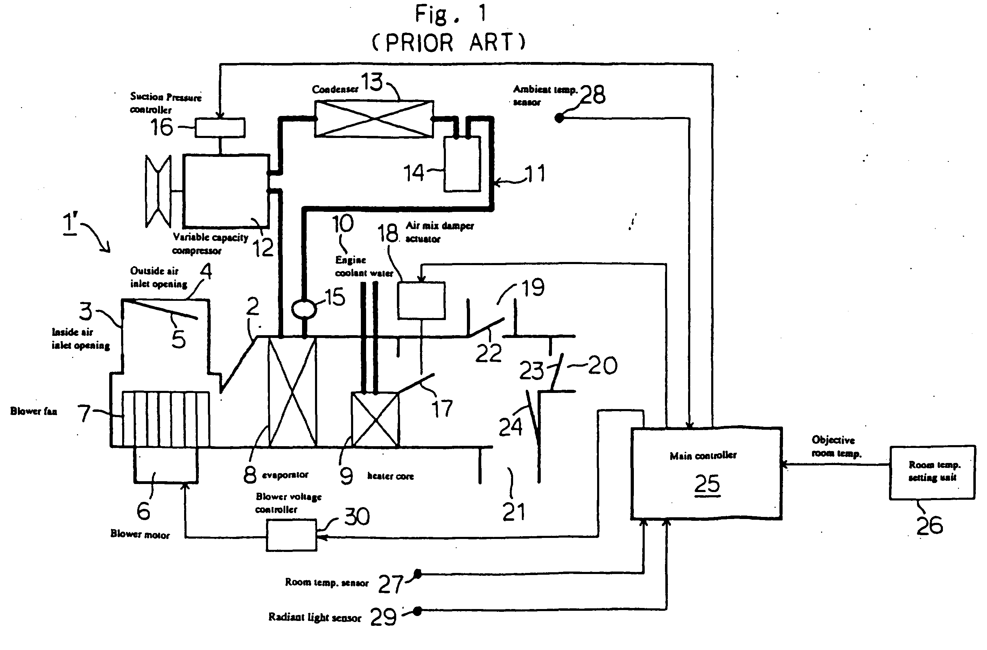

Referring to **Fig. 1**, a known air conditioning apparatus 1' is shown. Within ventilation duct 2, a blower, which includes blower fan 7 and blower motor 6, evaporator 8, and heater core 9 are arranged in a sequential manner. At the inlet of ventilation duct 2, inside air inlet opening 3 and outside air inlet opening 4 are provided. Air introduced into ventilation duct 2 may be selected either from air inside the passenger compartment, or from air outside the passenger compartment, by switching damper 5, in accordance with a passenger's selection. At the outlet of ventilation duct 2, three air discharge ports, 19, 20, and 21 (each corresponding to a specific output location, e.g., DEF, VENT, and FOOT, respectively) are provided. Each of three air discharge ports 19, 20, and 21, is provided with damper 22, 23, and 24, respectively, which is opened or closed in accordance with the passenger's selection.

Refrigerant circuit 11 comprises expansion valve 15, evaporator 8, variable capacity compressor 12, condenser 13, and reservoir tank 14. Suction pressure controller 16 regulates the suction pressure of the refrigerant gas sucked into the variable capacity compressor 12, and thus adjusts the refrigerating power of refrigerant circuit 11. In other words, the ability of evaporator 8 to cool the air flowing within ventilation duct 2 is controlled by suction pressure controller 16.

Coolant water 10 from the engine of the vehicle is circulated through heater core 9. Air mix damper 17 is provided for heater core 9, and is located immediately downstream of heater core 9. Air mix damper 17 adjusts the relative quantities of air flowing through heater core 9 and air bypassing heater core 9. Air mix damper actuator 18 regulates the position of air mix damper 17. In other words, the ability of heater core 9 to heat the air flowing through ventilation duct 2 is controlled by air mix damper actuator 18.

Air drawn by the blower from inside air inlet opening 3, or outside air inlet opening 4, is sent in downstream within ventilation duct 2. Air flowing within ventilation duct 2 is first cooled by evaporator 8, and is then warmed by heater core 9.

The air quantity flowing within ventilation duct 2 is regulated by blower voltage controller 30, which controls the voltage supplied to blower motor 6. Suction pressure controller 16 controls the degree of cooling of the air, and air mix damper actuator 18 controls the degree of warning of the air. These three controller condition the air, and the conditioned air flows out of air discharge ports 19, 20, and 21.

Ambient temperature sensor 28, room temperature sensor 27, radiant light sensor 29, and room temperature setting unit 26 generate signals, and these signals are input into main controller 25. Main controller 25 processes these signals and outputs control signals to the three controllers, i.e., blower voltage controller 30, suction pressure controller 16, and air mix damper actuator 18.

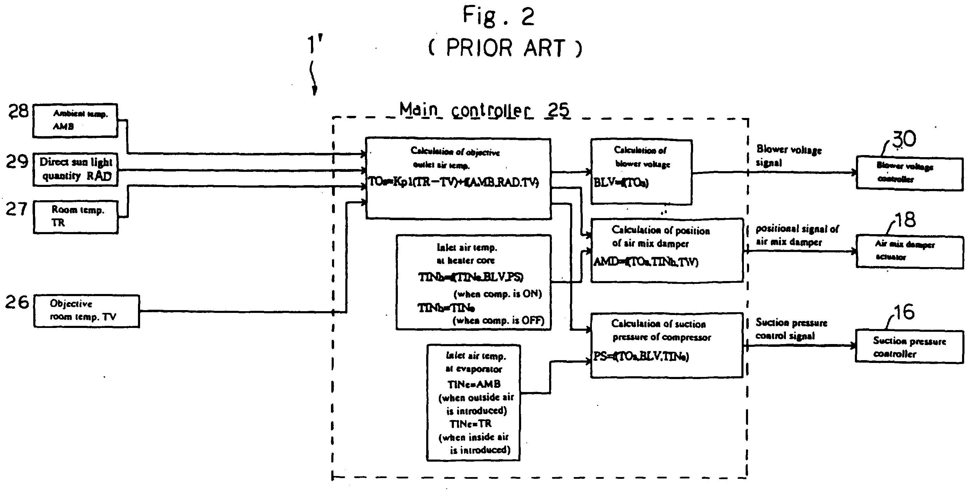

Referring to **Fig. 2**, a signal processing chart of main controller 25 is shown. Ambient temperature sensor 28 sends ambient temperature signal AMB to main controller 25. Radiant light sensor 29 detects the amount of direct sunlight shining on sensor 29 and sends sunlight quantity signal RAD to main controller 25. Room temperature sensor 27 sends room temperature signal TR to main controller 25. Room temperature setting unit 26 sends objective room temperature signal TV to main controller 25. Using the above signals, main controller 25 calculate objective outlet air temperature TOs according to the following equation:

$$TOs = Kp1(TR-TV) + f(AMB, RAD, TV) \qquad (1)$$

where Kp1 is a constant, and f is an appropriately designed function that may be linear in AMB, RAD, and TV, with negative dependence on AMB and RAD. After the determination of objective outlet air temperature TOs, the value of control signals for the three controllers, i.e., blower voltage controller 30, suction pressure controller 16, and air mix damper actuator 18 are determined.

Output signal BLV to blower voltage controller 30 is given by:

$$BLV = f(TOs) \qquad (2)$$

where f is an appropriately designed function.

Output signal AMD to air mix damper actuator 18 is given by:

$$AMD = f(TOs, TINh, TW) \hspace{3cm} (3)$$

where f is an appropriately designed function, and TW is a temperature of the engine coolant water circulating heater core 9.

The value of TINh is given by:

$$TINh = f(TINe, BLV, PS) \text{ (when the compressor is ON)}$$
$$= TINe \text{ (when the compressor is OFF)}$$

where f is an appropriately designed function, BLV is given by equation **(2)**, and PS is given by equation **(4)**, below.

The value of TINe is defined by:

$$TINe = AMB \text{ (when outside air is introduced.)}$$
$$= TR \text{ (when inside air is introduced.)}$$

Lastly, the output signal PS to suction pressure controller 16 is defined by,

$$PS = f(TOs, BLV, TINe) \cdot \hspace{3cm} (4)$$

where the value of BLV is given by equation **(2)**, and f is an appropriately designed function.

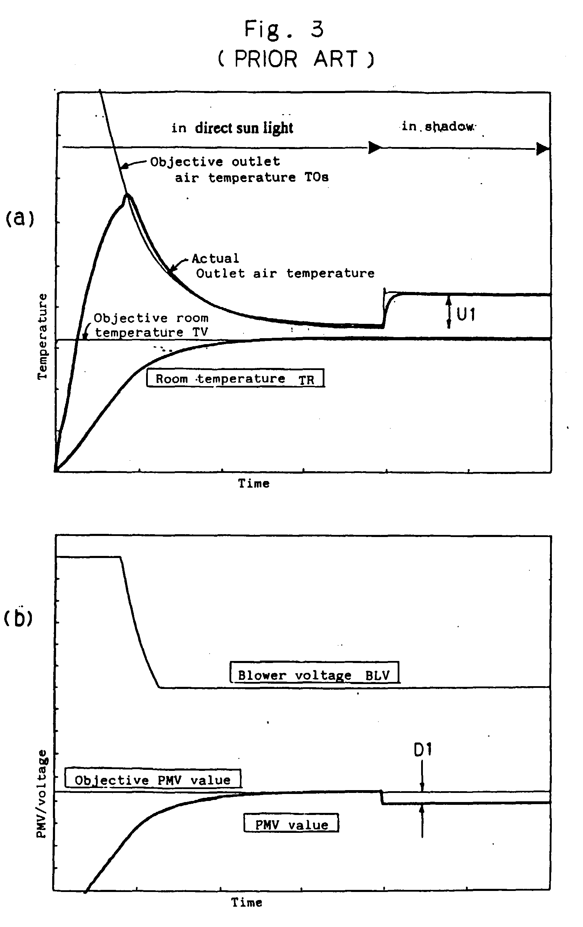

Known air conditioning apparatus 1' shows a typical responsive behavior against a change in an external condition. Referring to **Fig. 3(a)**, a response of air conditioning apparatus 1' when a vehicle moves from the direct sunlight and into the shadows is illustrated. With reference to **Fig. 2**, when the vehicle moves into the shadows, radiant light sensor 29 detects a decrease in direct sunlight quantity, and sends a corresponding signal, RAD, representing that information to main controller 25. Main controller 25 calculates objective outlet temperature TOs, which rises due to a decrease in RAD, the second term of equation **(1)**.

In **Fig. 3(a)**, the upper thin curve indicates objective outlet air temperature TOs, and the upper bold curve represents the actual outlet air temperature. The rise in the actual outlet air temperature is indicated by U1. In **Fig. 3(a)**, the lower thin horizontal line indicates objective room temperature TV, and lower bold curve indicates room temperature TR. As show in by this figure, although the actual outlet air temperature rises by U1, room temperature TR stays at approximately the same value. Referring again to **Fig. 2**, known air conditioning apparatus 1' maintains room temperature TR to be the same as objective room temperature TV, set in room temperature setting unit 26. Thus, known air conditional apparatus 1' controls the room temperature to become a desired value, which is set by the passenger, and continuously maintains this value.

However, the degree of comfortableness afforded by an air conditioning apparatus does not depend solely on the room temperature. Generally, the degree of comfortableness a passenger perceives, hereinafter referred to as the passenger's "thermal perception," depends on several factors, including, inter alia, the passenger's metabolic rate, the amount of clothing the passenger is wearing, the air temperature, the radiation temperature, the air flow, and the humidity. In the design of an air conditioning apparatus for a vehicle, the most important factors are the air temperature, the radiation temperature, the air flow, and the clothing amount. In other words, they are the room temperature in the vehicle, the ambient temperature outside the vehicle, the quantity of sunlight directed onto the outside the vehicle, the air flow quantity discharged from the air conditioning apparatus, and the amount of clothing the passenger is wearing.

An index which expresses this thermal perception, in numbers, is the seven-point Predicted Mean Vote (PMV) value system, and is provided in International Organization for Standardization, IS 7730, the disclosure of which is incorporated by reference:

| PMV | +3 | +2 | +1 | 0 | -1 | -2 | -3 |
|---|---|---|---|---|---|---|---|
| Thermal perception | hot | warm | slightly warm | neutral | slightly cool | cool | cold |

The PMV value is based on heat balance of the human body. A person is in thermal balance when the internal heat production in the body is equal to the loss of heat to the environment. In a moderate environment, a person's thermoregulator system will automatically try to modify the skin temperature and the sweat secretion to maintain heat balance.

An exact value for PMV may be calculated from the various parameters such as the metabolic quantity, the amount of clothing the passenger is wearing, the air temperature, the radiation temperature, the air flow, and the humidity. The detailed definitive equation is given by the following equation:

$$PMV = (0.303\ e^{-0.036M} + 0.028)\ [(M\text{-}W) - 3.05 \times 10^{-3} \times [5733 - 6.99\ (M\text{-}W) - p_a] - 0.42$$

$$\times\ [(M\text{-}W) - 58.15] - 1.7 \times 10^{-5} M\ (5867 - p_a) - 0.0014\ M(34 - t_a) - 3.96 \times$$

$$10^{-8} f_{cl} \times [(t_{cl} + 273)^4 - \overline{t}_r + 273)^4] - f_{cl} h_c(t_{cl} - t_a)$$

where

$$t_{cl} = 35.7 - 0.028\ (M\text{-}W) - I_{cl}\ [3.96 \times 10^{-8} f_{cl} \times [(t_{cl} + 273)^4 - (t_r + 273)^4] + f_{cl}\ h_c\ (t_{cl} - t_a)];$$

$$h_c = 2.38\ (t_{cl} - t_a)^{0.25} \text{ for } 2.38\ (t_{cl} - t_a)^{0.25} > 12.1 \sqrt{v_{ar}}$$

$$12.1 \sqrt{v_{ar}} \text{ for } 2.38\ (t_{cl} - t_a)^{0.25} < 12.1 \sqrt{v_{ar}}$$

$$f_{cl} = 1.00 + 1.290\ I_{cl} \text{ for } I_{cl} \leq 0.078\ m^2 {}^*C/W$$

$$1.05 + 0.645\ I_{cl} \text{ for } I_{cl} > 0.078\ m^2 {}^*C/W$$

where

PMV   is the predicted mean vote;
$M$   is the metabolic rate, in watts per square meter of body surface area;
$W$   is the external work, in watts per square meter, equal to zero for most activities;
$I_{cl}$   is the thermal resistance of clothing, in square meters degrees Celsius per watt;
$f_{cl}$   is the ratio of a person's surface area while clothed to man's surface area while nude;
$t_a$   is the air temperature, in degrees Celsius;
$t_r$   is the mean radiant temperature, in degrees Celsius;
$v_{ar}$   is the relative air velocity (relative to the human body) in meters per second;
$p_a$   is the partial water vapor pressure, in Pascals;
$h_c$   is the convective heat transfer coefficient, in watts per square meter degrees Celsius; and
$t_{cl}$   is the surface temperature of clothing, in degrees Celsius.

The PMV value becomes a measurable quantity if assumptions concerning the value of some of the parameters (_e.g.,_ the metabolic rate, clothing amount, and humidity) are made, or if these parameters are measured or otherwise determined and input.

Referring **Fig. 3(b)**, the lower bold curve indicates an estimated PMV value. As is indicated by D1, the PMV value decreases stepwise when the vehicle moves from the direct sunlight and into shadow, indicating that the passenger experiences a thermal perception that is not the one desired. Although the room temperature does not change significantly, the passenger feels slightly cool and uncomfortable.

Likewise, a change in the PMV value may be caused by the changes in the air flow quantity or in the ambient temperature, giving the passenger an undesired thermal perception. This problem arises because the known air conditioning apparatus 1' controls the value for room temperature TR first. Accordingly, if it is possible to control the PMV value or other thermal perception index first instead of controlling the room temperature TR first, the performance of an air conditioning apparatus will improve.

Therefore, a need has arisen for an air conditioning apparatus that controls a thermal perception index first. Accordingly, it is a technical advantage of the present invention to provide a vehicular air conditioning apparatus that conditions air based on a thermal perception index. Another technical advantage of the present invention is that it provides a vehicular air conditioning apparatus that is equipped with in objective thermal perception index setting unit and controls the thermal perception index inside the vehicle to reach and maintain a passenger's desired level.

The air conditioning apparatus of the present invention comprises a blower, an evaporator, a heater core, and an air mix damper actuator, which are arranged sequentially within the ventilation duct, and a refrigerant circuit. Objective thermal perception index setting unit, room temperature sensor, ambient temperature sensor, and radiant light sensor are connected to the main controller. The main controller processes signals from these sensors, and provide control signals for a blower voltage controller, a suction pressure controller, and an air mix damper actuator.

The air conditioning apparatus of the present invention calculates an objective room temperature which is defined so as to correspond to the objective thermal perception index set in the setting unit and to several state variables, and then controls the blower, the evaporator, and the air mix damper, based on a difference between the calculated objective temperature and the actual room temperature sensed by the room temperature sensor.

In the accompanying drawings:

**Fig. 1** is a hardware diagram of a known air conditioning apparatus.
**Fig. 2** is a control flow diagram of a known air conditioning apparatus.
**Fig. 3** is a simulation diagram of response characteristics of a known air conditioning apparatus.
**Fig. 4** is a first control embodiment of the present invention of an air conditioning apparatus.
**Fig. 5** is a second control embodiment of the present invention of an air conditioning apparatus.
**Fig. 6** is a hardware diagram of an air conditioning apparatus according to the second control embodiment of the present invention.
**Fig. 7** is a control flow diagram of an air conditioning apparatus of **Fig. 6**.
**Fig. 8** is a diagram of the functional relationship for determining the blower voltage.
**Fig. 9** is a simulation diagram of a response characteristic of an air conditioning apparatus of **Fig. 6**.

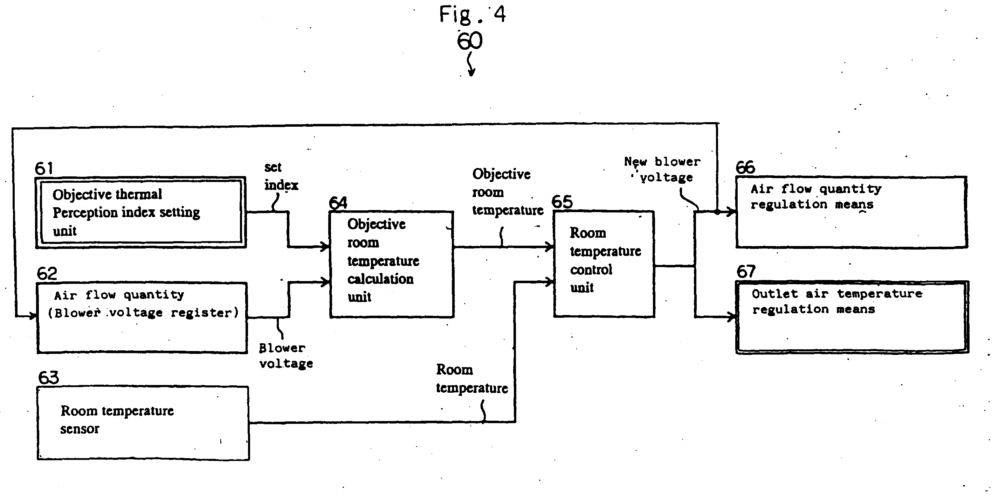

Referring to **Fig. 4**, a first control embodiment 60 of the present invention is shown. In box 64, an objective room temperature that corresponds to a passenger's desired thermal perception index is calculated from objective thermal perception index, set in box 61, and current blower voltage 62. Based on a difference between the calculated objective room temperature, and the actual room temperature sensed in box 63, a new blower control voltage and outlet air temperature are computed in box 65, and corresponding control signals are sent to air flow quantity regulation means 66 and to outlet air temperature regulation means 67.

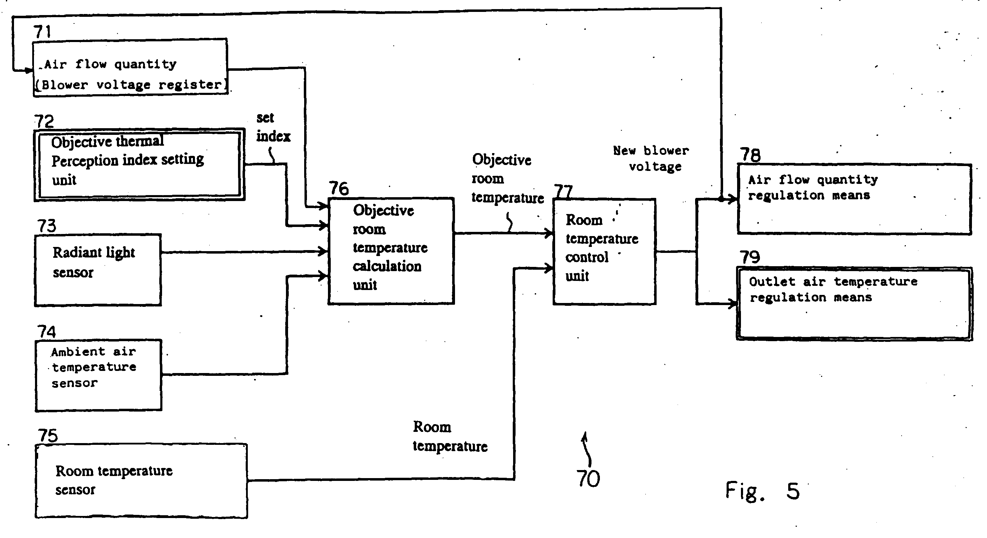

Referring to **Fig. 5**, a second control embodiment 70 of the present invention of an air conditioning apparatus is depicted. In box 76, an objective room temperature that corresponds to the passenger's desired thermal perception index is calculated from current blower voltage 71, an objective thermal perception index set in box 72, direct sunlight quantity from radiant light sensor in box 73, and ambient temperature from ambient air temperature sensor in box 74. Based on a difference between the calculated objective room temperature and the actual room temperature, sensed in box 75, new blower control voltage and outlet air temperature are computed by room temperature control unit in box 77, and corresponding control signals are sent to air flow quantity regulation means 78 and outlet air temperature regulation means 79.

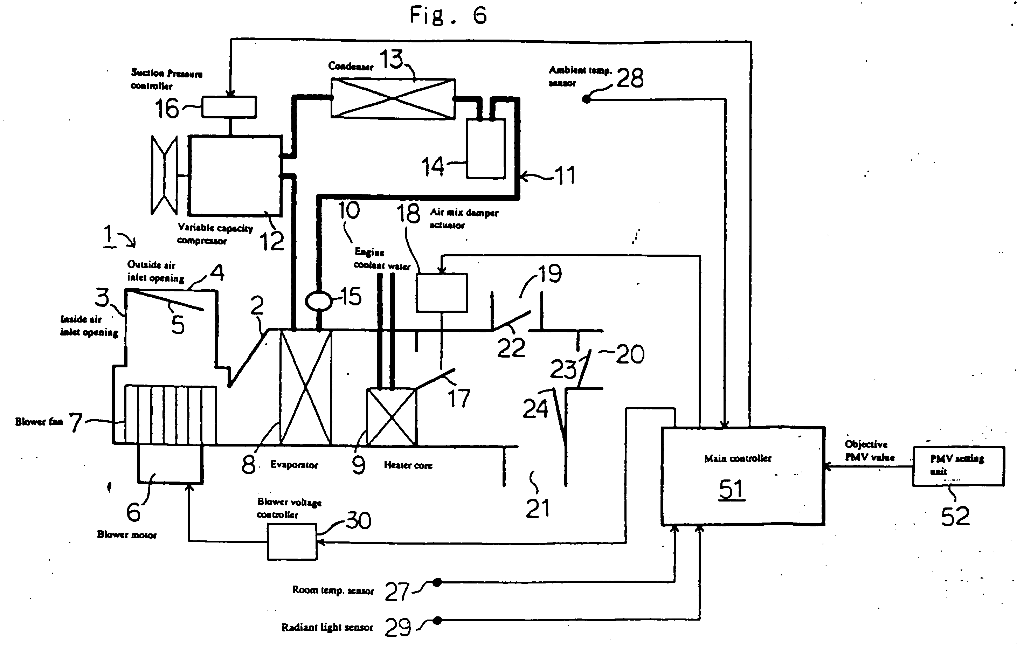

Referring to **Fig. 6**, a diagram of an air conditioning apparatus 1 according to the second control embodiment of the present invention is shown. Because like numbers are used to represent like parts of **Fig. 1**, an explanation of these parts is omitted. For a thermal perception index, the PMV value is employed. In this figure, PMV setting unit 52 is connected to main controller 51. The process of main controller 51 will be further described below.

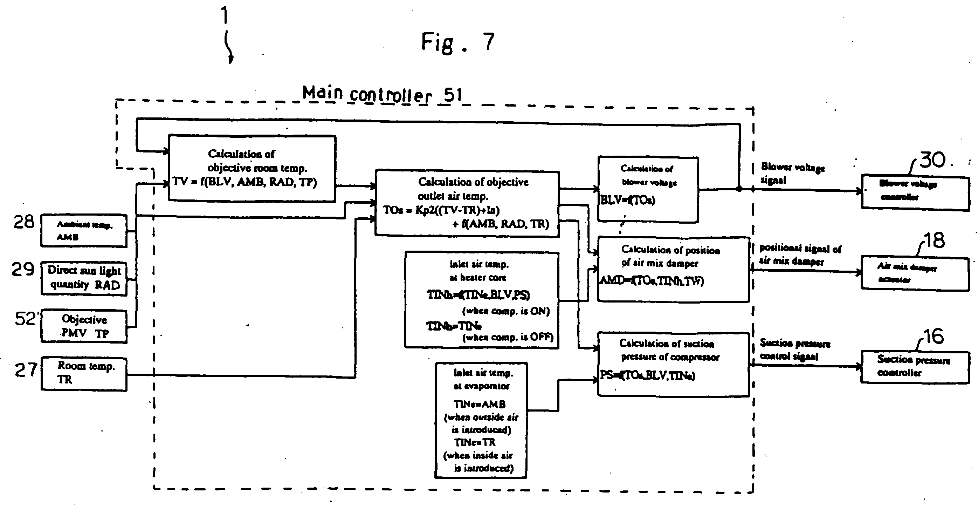

Referring to **Fig. 7**, a signal processing chart of an air conditioning apparatus of **Fig. 6** is shown. Ambient temperature sensor 28 sends ambient temperature signal AMB to main controller 51. Radiant light sensor 29 sends direct sunlight quantity signal RAD to main controller 51. Objective thermal perception index setting unit 52 sends objective thermal perception index signal TP to main controller 51. Using above signals, main controller 51 computes an objective room temperature according to the following approximation equation:

$$TV = aTP + bAMB + cRAD + dBLV + e \qquad (5)$$

where a, b, c, d, and e are constants, and BLV is a value obtained in the previous computational cycle. Based on a difference between the calculated objective room temperature TV obtained by equation **(5)** and actual room temperature TR sensed by the room temperature sensor 27, objective outlet air temperature TOs is calculated according to the following equation:

$$TOs = Kp2\,((TV-TR)+I_n) + gAMB + hRAD + iTR + j \qquad (6)$$

where Kp2(TV-TR) is a proportional action term, and Kp2, g, h, i, and j are constants. The "In" is an integral action term, given by the following equation:

5

$$I_n = I_{n-1} + (delta/Ki)(TV-TR) \tag{7}$$

where $I_{n-1}$ is a value obtained in a previous computational cycle, delta is a time period for one computational cycle, and Ki is a constant.

Based on the objective outlet air temperature TOs, the control signals to the three controllers are calculated. The output signal BLV to the blower voltage controller 30 is calculated by:

$$BLV = f(TOs) \tag{8}$$

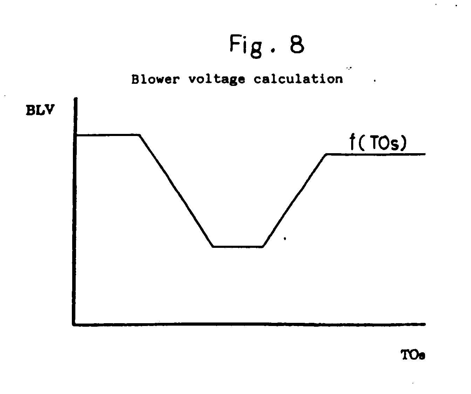

where f is an appropriately designed function, one of which is illustrated in **Fig. 8**. The output signal AMD to air mix damper actuator 18 is calculated by:

$$AMD = f(TOs, TINh, TW) \tag{9}$$

where f is an appropriately designed function, such as (TOs-T1Nh)/(TW-T1Nh) . TW is the engine coolant water temperature. TINh is defined by:

$$TINh = \begin{array}{ll} f(TINe, BLV, PS) & \text{when the compressor is ON,} \\ TINe & \text{when the compressor is OFF} \end{array} \tag{10}$$

where f is an appropriately designed function, which may be linear in TINe, BLV, and PS, and has positive dependence on all, and BLV is given by equation **(8)**, and PS is given by equation **(12)**, below.

Further, TINh is defined by:

$$TINe = \begin{array}{ll} AMB & \text{when outside air is introduced,} \\ TR & \text{when inside air is introduced.} \end{array} \tag{11}$$

Lastly, the output signal to suction pressure controller 16 is calculated by:

$$PS = f(TOs, BLV, TINe) \tag{12}$$

where f is an appropriately designed function, which may be linear in TOs, BLV, and TINe, and has negative dependence on TINe.

Constants a, b, c, d, e, g, h, i, j, Kp1, Kp2, and delta maybe defined as shown in Table I:

Table 1

| Constant | Range of Values | Meaning |
|---|---|---|
| a | about 2.0 to about 10.0 | PMV value dependence |
| b | about -0.5 to about 0.0 | Ambient temperature dependence |
| c | about -4.0 to about -1.0 | Direct sunlight dependence |
| d | about 0.0 to about 2.5 | Blower intensity dependence |
| e | about -20 to about +20 | Total offset |
| g | about 0.0 to about 0.1 | Ambient temperature dependence |

Table 1 (continued)

| Constant | Range of Values | Meaning |
|---|---|---|
| h | about 0.2 to about 0.8 | Direct sunlight dependence |
| i | about 0.1 to about 0.5 | Room temperature dependence |
| j | about -20 to about +20 | Total offset |
| Ki | about 200 to about 800 | Sensitivity parameter of the integral action term |
| Kp1 | about 4 to about 20 | Determinant of controllability |
| Kp2 | about 4 to about 20 | Determinant of controllability |
| delta | about 0.1 to about 5 | Period of one computational cycle |

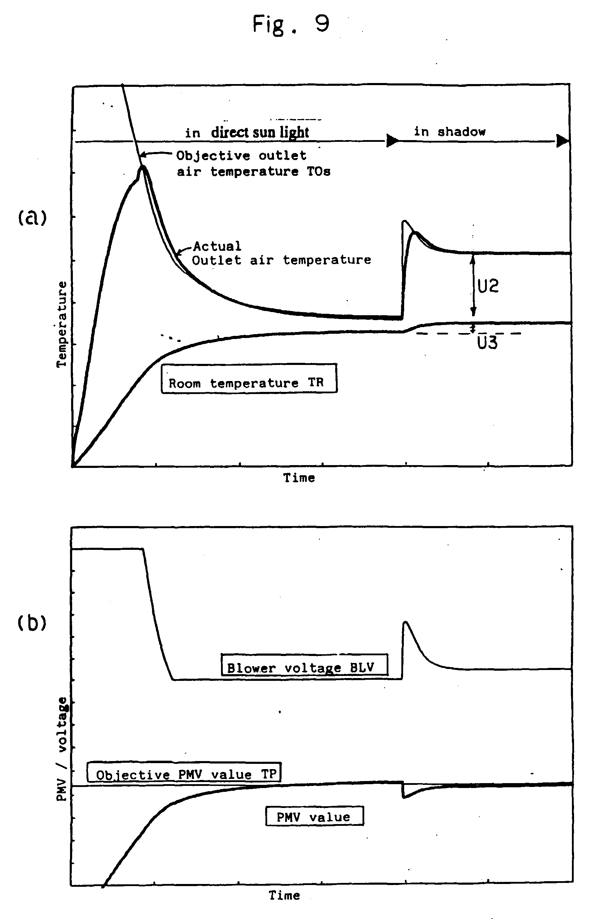

Air conditioning apparatus 1 according to the present invention shows a response characteristic, illustrated in **Fig. 9**. From the upper bold curve in **Fig. 9(a)**, the actual outlet air temperature rises more than in known air conditioning apparatus 1' when the vehicle moves from the direct sunlight into the shadow (compare U1 in **Fig. 3(a)** and U2 in **Fig. 9(a)**). As a result, room temperature TR indicated by the lower bold curve in **Fig. 9(a)** rises slightly (indicated by U3). Nevertheless, the actual PMV value does not deviate substantially in response to a change in external condition, as seen from the lower bold curve in **Fig. 9(b)**. This is because the air conditioning apparatus according to the present invention is equipped with an objective thermal perception index setting unit and controls the thermal perception index first to reach and maintain the room temperature which corresponds to the passenger's desired objective thermal perception index. Therefore, the passenger senses little or no change in thermal perception. In other words, even if the vehicle goes into shadow from direct sunlight, the passenger does not feel cooler because the control mechanism increases the room temperature by an appropriate amount.

Thus, according to the present invention, because the passengers thermal perception (_i.e._, the PMV value) is controlled first, it is possible to maintain a truly comfortable feeling for the passenger, even if external conditions change.

Though a PMV value is adopted as a thermal perception index in an air conditioning apparatus, illustrated in **Fig. 6**, this is not restricted thereto. For example, action temperature, equivalent temperature, effective temperature, or a new effective temperature may be employed as substitutes for a thermal perception index. In this case, equation **(5)** should be replaced by a corresponding equation.

Additionally, it may be sufficient for the PMV setting unit of an air conditioning apparatus of the present invention to have a range of from about -1.5 to about +1.5. In order to mirror a known temperature setting unit, either in Celsius or Fahrenheit, any appropriate scale may be used on the PMV setting unit. An example of such scale may be from about +18 to about +32, where about +18 is equivalent to about a -1.5 PMV value, about +25 is equivalent to about a 0 PMV value, and about +32 is equivalent to about a +1.5 PMV value. Other scales, such as from about +65 to about +95, for example, may also be used.

**Claims**

1. An air conditioning apparatus for a vehicle, comprising:

    an objective thermal perception index setting means;
    an air flow quantity registering means;
    a room temperature sensing means;
    an objective room temperature calculation means,
    a room temperature control means;
    an air flow quantity regulation means; and
    an outlet air temperature regulating means;
    wherein said objective room temperature calculation means calculates an objective room temperature within a compartment of a vehicle using a plurality of signals from said objective thermal perception index setting means and said air flow quantity registering means, said room temperature control means reducing a difference between the calculated objective room temperature and an actual room temperature sensed by said room temperature sensing means, by providing control signals for said air flow quantity regulating means and said outlet air temperature regulating means.

2. The air conditioning apparatus of claim 1, wherein said room temperature control means controls said air flow quantity means and said outlet air temperature regulating means, using an operation selected from the group consisting of proportional action and integral action, concerning the difference between the calculated objective room temperature and an actual room temperature which was sensed in said room temperature sensing means.

3. The air conditioning apparatus of claim 1, wherein said objective room temperature is calculated in said objective room temperature calculating means according to the following equation:

$$\text{Objective room temperature} = aTP + bAMB + cRAD + dBLV + e$$

where:

TP is a Objective thermal perception index set in said objective thermal perception index setting means;
AMB is an ambient temperature sensed by said ambient temperature sensing means;
RAD is a quantity of direct sunlight sensed by said direct sunlight quantity sensing means;
BLV is a control quantity for said air flow quantity regulating means; and a, b, c, d, and e are constants.

4. The air conditioning apparatus of claim 3, wherein at least one of said constants has a value of zero.

5. The air conditioning apparatus of claim 1, wherein said air flow quantity regulating means comprises:

a blower; and
a blower voltage controller.

6. The air conditioning apparatus of claim 1, wherein said outlet air temperature regulating means comprises:

an evaporator in a refrigerant circuit;
heater core through which engine coolant water circulates; and
an air mix damper having an air mix damper actuator.

7. The air conditioning apparatus of claim 1, wherein said objective thermal perception index setting means has a corresponding temperature scale, said corresponding temperature scale selected from the group consisting of a Celsius temperature scale and a Fahrenheit temperature scale.

8. An air conditioning apparatus for a vehicle, comprising:

an objective thermal perception index setting means;
an air flow quantity registering means;
a direct sunlight quantity sensing means;
an ambient temperature sensing means;
a room temperature sensing means;
an objective room temperature calculation means;
a room temperature control means;
an air flow quantity regulation means; and
an outlet air temperature regulating means;
wherein said objective room temperature calculation means calculates an objective room temperature within a compartment of a vehicle using a plurality of signals from said objective thermal perception index setting means, said air flow quantity registering means, said direct sunlight quantity sensing means, and said ambient temperature sensing means, said room temperature control means reducing a difference between the calculated objective room temperature and an actual room temperature sensed by said room temperature sensing means, by providing control signals for said air flow quantity regulating means and said outlet air temperature regulating means.

9. The air conditioning apparatus of claim 8, wherein said room temperature control means controls said air flow quantity means and said outlet air temperature regulating means, using an operation selected from the group consisting of proportional action and integral action, concerning the difference between the calculated objective room temperature and an actual room temperature which was sensed in said room temperature sensing means.

10. The air conditioning apparatus of claim 8, wherein said objective room temperature is calculated in said objective room temperature calculating means according to the following equation:

Objective room temperature = aTP + bAMB + cRAD + dBLV + c

where:

TP is a Objective thermal perception index set in said objective thermal perception index setting means;
AMB is art ambient temperature sensed by said ambient temperature sensing means;
RAD is a quantity of direct sunlight sensed by said direct sunlight quantity sensing means;
BLV is a control quantity for said air flow quantity regulating means; and a, b, c, d, and e are constants.

**11.** The air conditioning apparatus of claim 8, wherein at least one of said constants has a value of zero.

**12.** The air conditioning apparatus of claim 8, wherein said air flow quantity regulating means comprises:

a blower; and
a blower voltage controller.

**13.** The air conditioning apparatus of claim 8, wherein said outlet air temperature regulating means comprises:

an evaporator in a refrigerant circuit;
a heater core through which engine coolant water circulates; and
an air mix damper having an air mix damper actuator.

**14.** The air conditioning apparatus of claim 8, wherein said objective thermal perception index setting means has a corresponding temperature scale, said corresponding temperature scale selected from the group consisting of a Celsius temperature scale and a Fahrenheit temperature scale.

Fig. 1
(PRIOR ART)

EP 0 968 855 A1

Fig. 2
( PRIOR ART )

# Fig. 3
## ( PRIOR ART )

(a)

in direct sun light · · · · · · · · · · · · · · · · · · · · ▶ in shadow

Objective outlet
air temperature TOs

Actual
Outlet air temperature

U1

Objective room
temperature TV

Room temperature TR

Temperature

Time

(b)

Blower voltage BLV

D1

Objective PMV value

PMV value

PMV/voltage

Time

Fig. 4

60

61 **Objective thermal Perception index setting unit**

set index

64 **Objective room temperature calculation unit**

Objective room temperature

65 **Room temperature control unit**

New blower voltage

66 **Air flow quantity regulation means**

62 **Air flow quantity (Blower voltage register)**

Blower voltage

67 **Outlet air temperature regulation means**

63 **Room temperature sensor**

Room temperature

EP 0 968 855 A1

**71**

Air flow quantity
(Blower voltage register)

**72**

Objective thermal
Perception index setting
unit

**73**

Radiant light
sensor

**74**

Ambient air
temperature
sensor

**75**

Room temperature
sensor

set
index

**76**

Objective
room
temperature
calculation
unit

Objective
room
temperature

New blower
voltage

**77**

Room
temperature
control
unit

**78**

Air flow quantity
regulation means

**79**

Outlet air temperature
regulation means

Room
temperature

70

Fig. 5

# Fig. 6

Fig. 7

Main controller 51

1

Calculation of
objective room temp.
TV = f(BLV, AMB, RAD, TP)

28  Ambient temp.
AMB

29  Direct sun light
quantity RAD

52'  Objective
PMV  TP

27  Room temp.
TR

Calculation of objective
outlet air temp.
TOs = Kp2((TV-TR)+In)
      + f(AMB, RAD, TR)

Inlet air temp.
at heater core
TINh=f(TINe,BLV,PS)
       (when comp. is ON)
TINh=TINe
       (when comp. is OFF)

Inlet air temp.
at evaporator
TINe=AMB
(when outside air
is introduced)
TINe=TR
(when inside air
is introduced)

Calculation of
blower voltage
BLV=f(TOs)

Blower voltage
signal

30  Blower voltage
controller

Calculation of position
of air mix damper
AMD=f(TOs,TINh,TW)

positional signal of
air mix damper

18  Air mix damper
actuator

Calculation of suction
pressure of compressor
PS=f(TOs,BLV,TINe)

Suction pressure
control signal

16  Suction pressure
controller

EP 0 968 855 A1

# Fig . 8

**Blower voltage calculation**

## Fig. 9

(a)

in direct sun light | in shadow

Objective outlet
air temperature TOs

Actual
Outlet air temperature

U2

U3

Room temperature TR

Temperature

Time

(b)

Blower voltage BLV

Objective PMV value TP

PMV value

PMV / voltage

Time

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | EP 0 872 368 A (SANDEN CORP) 21 October 1998 * the whole document * | 1-14 | B60H1/00 |
| Y | US 5 170 935 A (FEDERSPIEL CLIFFORD C ET AL) 15 December 1992 * claim 1 * | 1,8 | |
| Y | EP 0 618 098 A (FIAT AUTO SPA) 5 October 1994 * the whole document * | 1,8 | |
| A | PATENT ABSTRACTS OF JAPAN vol. 098, no. 005, 30 April 1998 & JP 10 002594 A (MATSUSHITA ELECTRIC IND CO LTD), 6 January 1998 * abstract * | 1 | |
| A | PATENT ABSTRACTS OF JAPAN vol. 018, no. 147 (M-1575), 11 March 1994 & JP 05 322258 A (MATSUSHITA ELECTRIC IND CO LTD;OTHERS: 01), 7 December 1993 * abstract * | 1 | TECHNICAL FIELDS SEARCHED (Int.Cl.6) B60H |
| A | PATENT ABSTRACTS OF JAPAN vol. 016, no. 290 (M-1272), 26 June 1992 & JP 04 078709 A (ISUZU MOTORS LTD), 12 March 1992 * abstract * | 8 | |

The present search report has been drawn up for all claims

| Place of search | Date of completion of the search | Examiner |
|---|---|---|
| THE HAGUE | 9 November 1998 | Marangoni, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)